# EUROPEAN PATENT SPECIFICATION

(11) **EP 4 488 532 B1**
(45) Date of publication and mention of the grant of the patent: **12.11.2025**
(21) Application number: 23183447.4
(22) Date of filing: 04.07.2023
(51) Int. Cl.: F16B 25/00, F16B 25/10

(54) **SCREW**
SCHRAUBE
VIS

(43) Date of publication of application: 08.01.2025
(73) Proprietor: Taiwan Shan Yin International Co., Ltd., Kaohsiung City 82059 (TW)
(72) Inventor: Su, Kou-Tsair, 806 Kaohsiung City (TW); Su, Chen-Long, 800 Kaohsiung City (TW)
(74) Representative: Cabinet Chaillot

(56) References cited:
- EP-A1- 4 074 992
- US-A- 5 827 030
- US-A1- 2005 186 048

## Description

### BACKGROUND OF THE INVENTION

### 1. Field of the Invention

This invention relates to a screw and relates particularly to a screw capable of enlarging spaces for accommodating and moving chips, improving cutting effect, and avoiding cracking of a workpiece.

### 2. Description of the Related Art

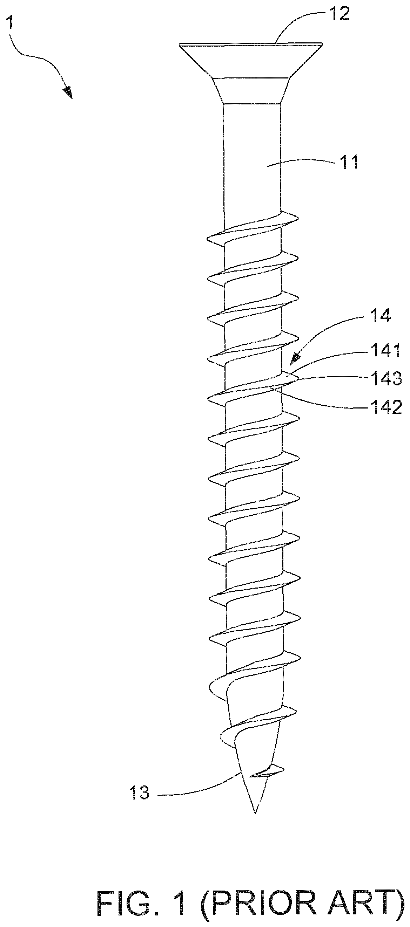

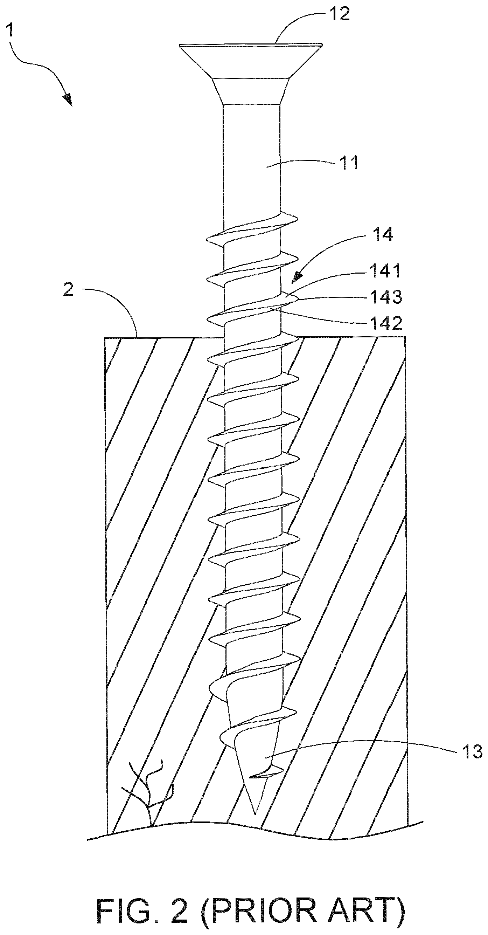

Referring to Figs. 1 and **2****,** a conventional screw 1 comprises a shank **11** having a first end and a second end opposite to the first end, a head **12** disposed at the first end of the shank **11,** a drill portion **13** disposed at the second end of the shank **11,** and a plurality of thread convolutions **14** spirally disposed on the shank **11.** Each thread convolution **14** has an upper thread flank **141** extending outwards from the shank **11** and facing the head **12,** a lower thread flank **142** extending outwards from the shank **11** and facing the drill portion **13,** and a thread crest **143** formed along a junction of the upper thread flank **141** and the lower thread flank **142.** During a screwing operation, the drill portion **13** is situated at a surface of a workpiece **2.** A rotational force is applied on the head **12** to carry out a cutting operation of the drill portion **13** and the thread convolutions **14** into the workpiece **2.** After the screw 1 is embedded in the workpiece **2,** the screwing operation is completed.

However, the thread convolutions **14** bear larger screwing resistance during the screwing operation because the thread convolutions **14** are formed to have complete threads. In other words, the thread convolutions **14** are provided without any notch, and that increases a contact area between the thread convolutions **14** and the workpiece **2.** Thus, the screwing resistance will increase when the thread convolutions **14** cut the workpiece **2,** and that may wear and damage the thread convolutions **14.** The worn and damaged thread convolutions **14** cannot sever fibers of the workpiece **2** effectively. Spaces defined between the thread convolutions **14** and the shank **11** are not enough for chips exclusion and accommodation. Therefore, the chips are discharged slowly, and that will increase the screwing resistance and reduce the screwing speed. If the screw **1** keeps pressing the chips, the workpiece **2** may crack. Further, the screw **1** cannot hold the chips sufficiently, and that will result in poor engagement between the screw **1** and the workpiece **2.** The screw **1** may be loose and fall from the workpiece **2** easily, and that requires to be improved.

Relevant screws are known to the person skilled in the art and are disclosed by, for example, US5827030A, US2005/186048A1, and EP4074992A1.

### SUMMARY OF THE INVENTION

The object of this invention is to provide a screw capable of severing fibers of a workpiece, enhancing cutting effect, providing enough spaces for chips to thereby reduce screwing resistance and attain a tight engagement.

The screw of this invention is as defined in Claim 1 and comprises a shank having opposite first and second ends, a head formed at the first and, a drill portion formed at the second end, and a plurality of thread convolutions spiraled on the shank and axially spaced apart so as to define a shank surface exposed to an outside of the shank. The shank surface is divided into a plurality of surface sections defined between adjacent thread convolutions, with at least one knurl portion arranged on at least one surface section. The knurl portion has a plurality of troughs crossing each and formed recessedly. Each thread convolution has an upper thread flank and a lower thread flank facing opposite directions, a thread crest formed along a junction of the upper thread flank and the lower thread flank, a plurality of notches recessed into the thread crest, a plurality of cutting edges each formed along an outer periphery of a corresponding one notch respectively, and a plurality of cutting units. Every two adjacent cutting units are separated by one notch so that the cutting units and the notches are arranged in an alternating manner. Each cutting unit of one thread convolution is aligned with a corresponding one notch of another thread convolution adjacent to the one thread convolution. During a screwing operation, the cutting units and the cutting edges are adapted to cut fibers of a workpiece into chips effectively to thereby improve the cutting effect. The chips are allowed to pass through the notches, and simultaneously move outwards quickly through the troughs. Further, the remaining chips are accommodated within the notches and the troughs after the screwing operation is complete to thereby reduce the screwing resistance, accelerate the screwing operation, prevent the workpiece from cracking, and allow the screw to engage with the workpiece firmly.

Preferably, the notches are curved in shape.

Preferably, the notches and the cutting units are formed on part of the thread convolutions.

Preferably, a plurality of knurl portions are arranged on the surface sections defined between successive adjacent ones of the thread convolutions.

Preferably, the knurl portion is arranged on a corresponding one of the surface sections between every other thread convolution so that a plurality of knurl portions are spaced apart from each other.

Preferably, at least one surface section is recessedly formed to define an annular groove.

Preferably, the knurl portion occupies a partial surface of the surface section.

Preferably, the thread convolutions define a first threaded portion and a second threaded portion. The second threaded portion is spirally disposed on the shank and between the first threaded portion.

### BRIEF DESCRIPTION OF THE DRAWINGS

Fig. **1** is a schematic view showing a conventional screw;
Fig. **2** is a schematic view showing a screwing operation of the conventional screw;
Fig. **3** is a schematic view showing a first preferred embodiment of this invention;
Fig. **4** is an enlarged view of the encircled portion X indicated in Fig. 3;
Fig. **5** is a cross-sectional view showing the thread convolutions as seen along the line A-A of Fig. 3;
Fig. **6** is a schematic view showing a screwing operation of the first preferred embodiment of this invention;
Fig. **7** is a schematic view showing a second preferred embodiment of this invention characterized by a plurality of knurl portions spaced apart from each other;
Fig. **8** is a schematic view showing a third preferred embodiment of this invention characterized in that the knurl portions and the annular grooves are arranged in an alternating manner, with a first threaded portion and a second threaded portion formed on the shank;
Fig. **9** is a schematic view showing the first threaded portion and the second threaded portion; and

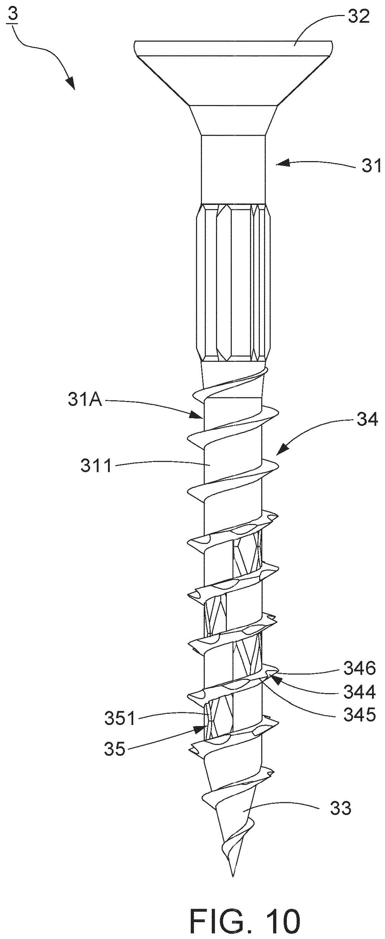

Fig. **10** is a schematic view showing a fourth preferred embodiment of this invention characterized in that the knurl portion occupies a partial surface of the surface section.

### DETAILED DESCRIPTION OF THE PREFERRED EMBODIMENTS

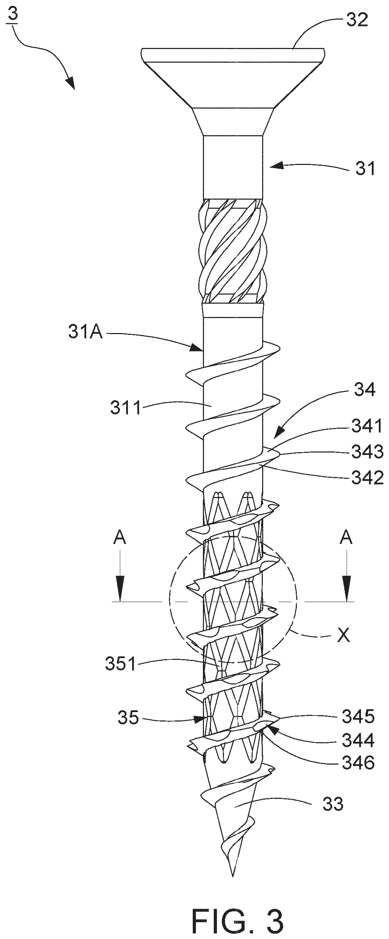

Referring to Fig. **3****,** a first preferred embodiment of a screw **3** of this invention is disclosed. The screw **3** includes a shank **31** having a first end and a second end opposite to the first end, a head 32 formed at the first end the shank **31,** a drill portion **33** formed at the second end of the shank **31,** and a plurality of thread convolutions **34** spirally formed on the shank **31.** The thread convolutions **34** extend and spaced apart from each other in an axial direction to define a shank surface **31A** exposed to an outside of the shank **31.** The shank surface **31A** is divided into a plurality of surface sections **311** each defined between every two adjacent thread convolutions **34.** At least one knurl portion **35** is recessedly formed in at least one surface section **311.** The knurl portion **35** has a plurality of troughs **351** crossing each other and recessedly formed in the surface section **311.** In this preferred embodiment, a plurality of knurl portions **35** are arranged on the surface sections **311** defined between seven successive adjacent ones of the thread convolutions **34.**

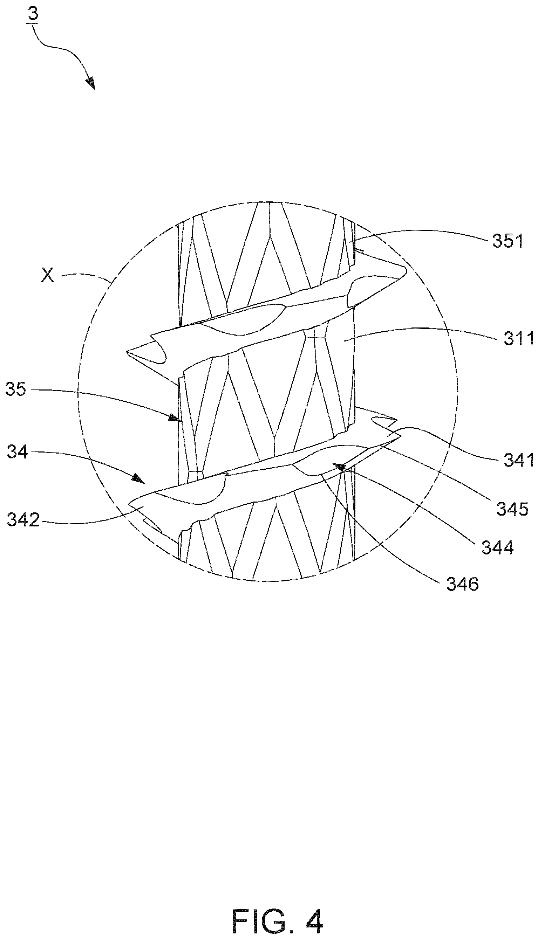

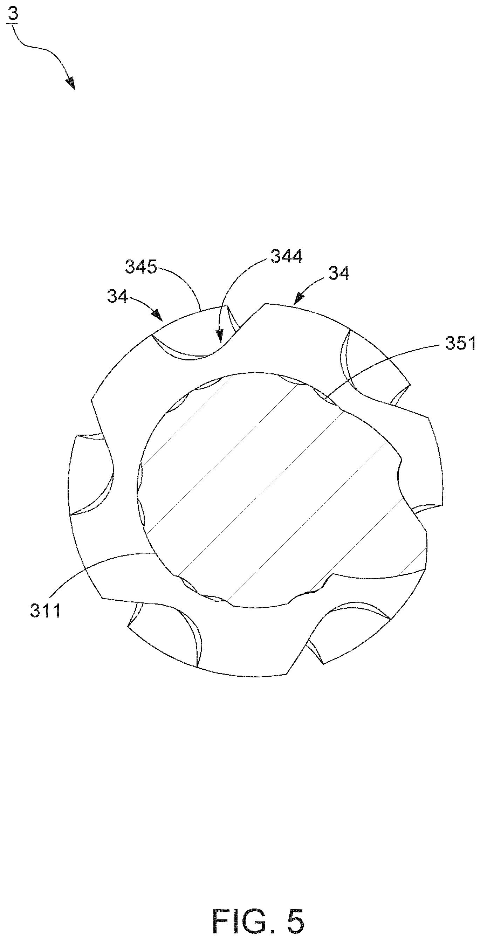

Referring to Figs. **3** and **4****,** each thread convolution **34** has an upper thread flank **341** extending outwards from the shank **31** and facing the head **32,** a lower thread flank **342** extending outwards from the shank **31** and facing the drill portion **33,** a thread crest **343** formed along a junction of the upper thread flank **341** and the lower thread flank **342,** a plurality of notches **344** recessed in the thread crest **343,** a plurality of cutting units **345** each situated between every two adjacent notches **344,** and a plurality of cutting edges **346** each formed along an outer periphery of each corresponding one notch **344.** In this preferred embodiment, the notches **344** are spaced apart from each other. Every two adjacent cutting units **345** are separated by one notch **344** so that the cutting units **345** and the notches **344** are arranged in an alternating manner. Referring to Fig. **5****,** each cutting unit **345** of one thread convolution **34** is situated in alignment with a corresponding one notch **344** of another thread convolution **34** adjacent to the one thread convolution **34.** In other words, the cutting units **345** of every two adjacent thread convolutions **34** are staggered. Thus, the positions of the notches **344** and the cutting units **345** of one thread convolutions **34** are arranged opposite to the positions of the notches **344** and the cutting units **345** of another adjacent thread convolution **34.** In this preferred embodiment, the notches **344** and the cutting edges **346** are formed in a curved shape. The notches **344,** the cutting edges **346,** and the cutting units **345** are formed on five and six thread convolutions **34.**

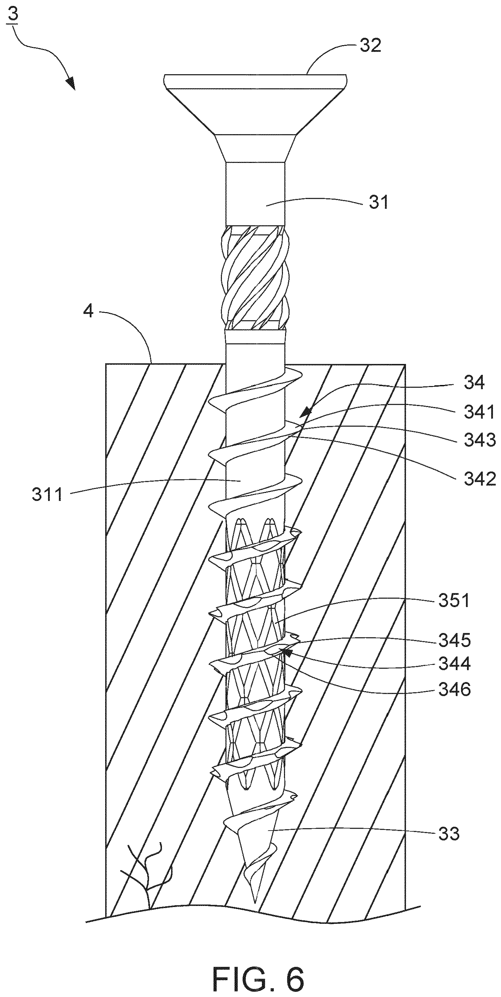

Referring to Figs. **3****,** **4** and **6****,** during a screwing operation of the screw **3,** the drill portion **33** is positioned against a surface of a workpiece **4.** Then, the head **32** receives a rotational force in order to carry out a cutting operation of the drill portion **33** and the thread convolutions **34.** During the cutting operation, the notches **344** formed on the thread convolutions **34** help reduce a contact area between the thread convolutions **34** and the workpiece **4** to thereby lower the screwing resistance caused when the thread convolutions **34** cut into the workpiece **4.** Meanwhile, the cutting units **345** and the cutting edges **346** sever fibers of the workpiece **4** into chips effectively to thereby prevent the shank **31** from being entangled in twisting fibers, reduce the screwing resistance, and improve the cutting effect. Because the cutting units **345** of each thread convolution **34** is aligned with the corresponding notches **344** of another adjacent thread convolution **34** to thereby attain the multiple cutting effect and cut the fibers of the workpiece **4** completely. Further, the troughs **351** enlarge spaces for accommodating and discharging the chips, and the chips are allowed to move smoothly and speedily in the troughs **351** and the notches **344** and are discharged outwards accordingly. Thus, the screw **3** can screw into the workpiece **4** quickly without be hindered by the chips. The screwing speed is increased and the screwing operation is accelerated. The chips will not accumulate unduly, and that prevents the workpiece **4** from cracking. After the screw **3** is embedded in the workpiece **4,** the remainder of chips are received within the troughs **351** and the notches **344** duly to thereby attain a tight engagement between the screw **3** and the workpiece **4,** prevent the screw **3** from being loose or falling, and achieve preferable anti-loosening effect.

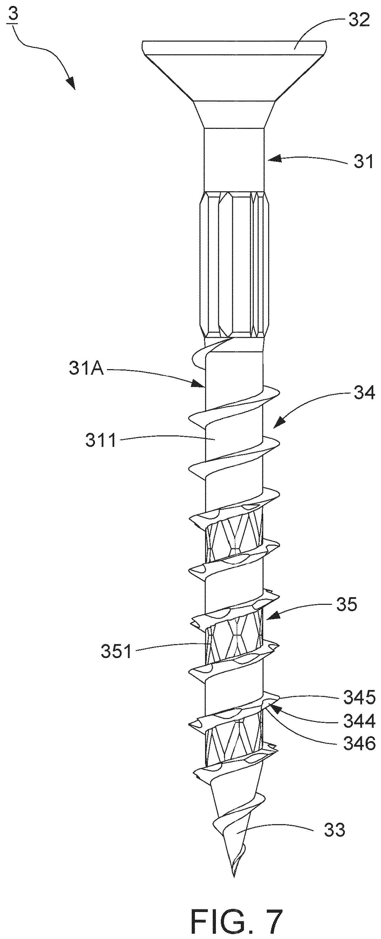

Referring to Fig. **7** shows a second preferred embodiment of the screw **3** of this invention. The correlated elements and the concatenation of elements, the operation and objectives of the second preferred embodiment are the same as those of the first preferred embodiment. This embodiment is characterized in that the knurl portion **35** is arranged on a corresponding one of the surface sections **311** between every other thread convolution **34** so that a plurality of knurl portions **35** are spaced apart from each other. Namely, when one knurl portion **35** is arranged on one surface section **311,** another surface section **311** adjacent to the one surface section **311** is flat in shape so that the flat surface sections **311** and the surface sections **311** provided with the knurl portion **35** are arranged in an alternating manner.

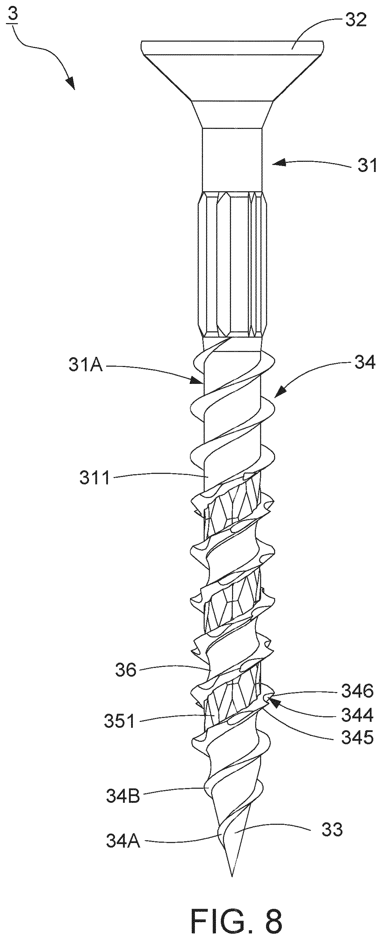

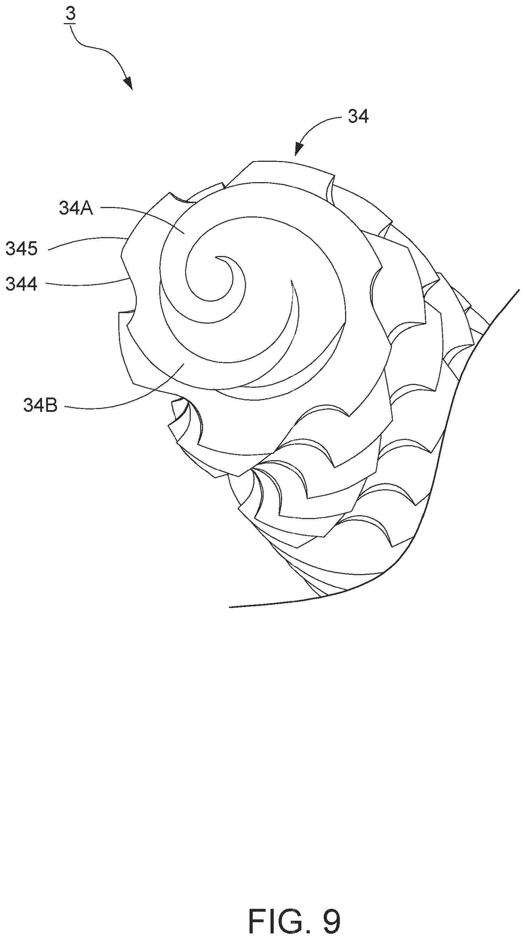

Referring to Figs. **8** and **9** shows a third preferred embodiment of the screw **3** of this invention. The correlated elements and the concatenation of elements, the operation and objectives of the third preferred embodiment are the same as those of the first preferred embodiment. This embodiment is characterized in that part of the surface sections **311** are each recessedly formed to define an annular groove **36,** and the knurl portions **35** are arranged on the remainder of the surface sections **311.** Preferably, the annular grooves **36** and the knurl portions **35** are arranged on the surface sections **311** respectively in an alternating manner. The thread convolutions **34** define a first threaded portion **34A** and a second threaded portion **34B.** The second threaded portion **34B** is spirally formed on the shank **31** and between the first threaded portion **34A.**

Referring to Fig. **9** shows a fourth preferred embodiment of the screw **3** of this invention. The correlated elements and the concatenation of elements, the operation and objectives of the fourth preferred embodiment are the same as those of the first preferred embodiment. This embodiment is characterized in that each knurl portion **35** occupies a partial surface of each surface section **311.** In other words, only the partial surface of the surface section **311** is provided with the knurl portion **35.** The remaining surface of the surface section **311** is flat in shape.

To sum up, the screw of this invention takes an advantage that the notches cut into the thread convolutions, with the cutting edges formed along the outer periphery of the notches, and the cutting units are each situated between every two adjacent notches whereby the thread convolutions bear smaller screwing resistance and sever the fibers of the workpiece effectively. The notches and the troughs allow the chips to travel therein, and provide enough spaces for the chips to thereby quickly exclude the chips outwards, reduce the screwing resistance, increase the screwing speed, and prevent the workpiece from cracking. Meanwhile, sufficient chips are accommodated within the troughs and the notches after the screw is embedded in the workpiece whereby the screw engages with the workpiece tightly, and that prevents the screw from being loose or falling from the workpiece easily.

While the embodiments of this invention are shown and described, it is understood that further variations and modifications may be made without departing from the scope of this invention as defined in the appended claims.

## Claims

1. A screw (3) comprising a shank (31) having opposite first and second ends, a head (32) disposed at said first end, a drill portion (33) disposed at said second end, and a plurality of thread convolutions (34) spirally formed between said first end and said second end of said shank (31), each of said plurality of thread convolutions (34) having an upper thread flank (341) facing said head (32), a lower thread flank (342) facing said drill portion (33), and a thread crest (343) formed along a junction of said upper thread flank (341) and said lower thread flank (342);
**characterized in that** adjacent thread convolutions (34) are axially spaced apart so that said shank (31) defines a shank surface (31A) exposed to an outside, with said shank surface (31A) divided into a plurality of surface sections (311) defined between said adjacent thread convolutions (34), said shank surface (31A) including at least one knurl portion (35) formed on at least one surface section (311), said at least one knurl portion (35) having a plurality of recessedly-formed troughs (351) crossing each other, a plurality of notches (344) being cut into said thread crests (343) of said plurality of thread convolutions (34), with a cutting edge (346) formed along an outer periphery of each said notch (344), a plurality of cutting units (345) being each formed between every two adjacent notches (344), each said cutting unit (345) of one thread convolution (34) being situated in alignment with a corresponding one notch (344) of another thread convolution (34) adjacent to said one thread convolution (34).

2. The screw (3) according to claim 1, wherein said plurality of notches (344) are curved in shape.

3. The screw (3) according to any one of claims 1 to 2, wherein said plurality of notches (344) and said plurality of cutting units (345) are formed on part of said thread convolutions (34).

4. The screw (3) according to any one of claims 1 to 3, wherein a plurality of knurl portions (35) are arranged on said plurality of surface sections (311) defined between successive adjacent ones of said thread convolutions (34).

5. The screw (3) according to any one of claims 1 to 3, wherein said at least one knurl portion (35) is arranged on a corresponding one of said surface sections (311) between every other thread convolution (34) so that a plurality of knurl portions (35) are spaced apart from each other.

6. The screw (3) according to any one of claims 1 to 5, wherein at least one of said surface sections (311) is recessedly formed to define an annular groove (36).

7. The screw (3) according to any one of claims 1 to 6, wherein said at least one knurl portion (35) occupies a partial surface of said at least one surface section (311).

8. The screw (3) according to any one of claims 1 to 7, wherein said plurality of thread convolutions (34) define a first threaded portion (34A) and a second threaded portion (34B), with said second threaded portion (34B) spirally disposed on said shank (31) and between said first threaded portion (34A).

## Patentansprüche

1. - Schraube (3), umfassend einen Schaft (31) mit gegenüberliegenden ersten und zweiten Enden, einen Kopf (32), der an dem ersten Ende angeordnet ist, einen Bohrabschnitt (33), der an dem zweiten Ende angeordnet ist, und eine Vielzahl von Gewindewindungen (34), die spiralförmig zwischen dem ersten Ende und dem zweiten Ende des Schafts (31) gebildet ist, wobei jede der Vielzahl von Gewindewindungen (34) eine obere Gewindeflanke (341), die dem Kopf (32) gegenüberliegt, eine untere Gewindeflanke (342), die dem Bohrabschnitt (33) gegenüberliegt, und eine Gewindespitze (343) umfasst, die entlang einer Verbindung der oberen Gewindeflanke (341) und der unteren Gewindeflanke (342) gebildet ist;
**dadurch gekennzeichnet, dass** benachbarte Gewindewindungen (34) axial voneinander beabstandet sind, so dass der Schaft (31) eine Schaftoberfläche (31A) definiert, die an einer Außenseite ausgesetzt ist, wobei die Schaftoberfläche (31A) in eine Vielzahl von Oberflächenabschnitte (311) unterteilt ist, die zwischen den benachbarten Gewindewindungen (34) definiert ist, wobei die Schaftoberfläche (31A) mindestens einen Knurlabschnitt (35) beinhaltet, der auf mindestens einem Oberflächenabschnitt (311) gebildet ist, wobei der mindestens eine Knurlabschnitt (35) eine Vielzahl von versenkt gebildeten Wannen (351) aufweist, die einander kreuzen, wobei eine Vielzahl von Kerben (344) in die Gewindespitzen (343) der Vielzahl von Gewindewindungen (34) geschnitten sind, wobei eine Schneidekante (346) entlang eines äußeren Umfangs jeder der Kerben (344) gebildet ist, wobei eine Vielzahl von Schneideeinheiten (345) zwischen jeweils zwei benachbarten Kerben (344) gebildet ist, wobei jede Schneideeinheit (345) einer Gewindewindung (34) in Ausfluchtung mit einer entsprechenden Kerbe (344) einer anderen Gewindewindung (34) benachbart zu der einen Gewindewindung (34) angeordnet ist.

2. - Schraube (3) nach Anspruch 1, wobei die Vielzahl von Kerben (344) eine gekrümmte Form aufweist.

3. - Schraube (3) nach einem der Ansprüche 1 bis 2, wobei die Vielzahl von Kerben (344) und die Vielzahl von Schneideeinheiten (345) auf einem Teil der Gewindewindungen (34) gebildet sind.

4. - Schraube (3) nach einem der Ansprüche 1 bis 3, wobei eine Vielzahl von Knurlabschnitten (35) auf der Vielzahl von Oberflächenabschnitten (311) angeordnet ist, die zwischen aufeinanderfolgenden der Gewindewindungen (34) definiert sind.

5. - Schraube (3) nach einem der Ansprüche 1 bis 3, wobei der mindestens eine Knurlabschnitt (35) auf einem entsprechenden der Oberflächenabschnitte (311) zwischen jeder zweiten Gewindewindung (34) angeordnet ist, so dass eine Vielzahl von Knurlabschnitten (35) voneinander beabstandet sind.

6. - Schraube (3) nach einem der Ansprüche 1 bis 5, wobei mindestens einer der Oberflächenabschnitte (311) versenkt gebildet ist, um eine ringförmige Nut (36) zu definieren.

7. - Schraube (3) nach einem der Ansprüche 1 bis 6, wobei der mindestens eine Knurlabschnitt (35) eine teilweise Oberfläche des mindestens einen Oberflächenabschnitts (311) einnimmt.

8. - Schraube (3) nach einem der Ansprüche 1 bis 7, wobei der Vielzahl von Gewindewindungen (34) einen ersten Gewindeabschnitt (34A) und einen zweiten Gewindeabschnitt (34B) definiert, wobei der zweite Gewindeabschnitt (34B) spiralförmig auf dem Schaft (31) und zwischen dem ersten Gewindeabschnitt (34A) angeordnet ist.

## Revendications

1. - Vis (3) comprenant une tige (31) ayant des première et seconde extrémités opposées, une tête (32) disposée à ladite première extrémité, une partie de perçage (33) disposée à ladite seconde extrémité, et une pluralité de circonvolutions de filetage (34) formées en spirale entre ladite première extrémité et ladite seconde extrémité de ladite tige (31), chacune de ladite pluralité de circonvolutions de filetage (34) ayant un flanc de filetage supérieur (341) faisant face à ladite tête (32), un flanc de filetage inférieur (342) faisant face à ladite partie de perçage (33), et une crête de filetage (343) formée le long d'une jonction dudit flanc de filetage supérieur (341) et dudit flanc de filetage inférieur (342) ;
**caractérisée par le fait que** des circonvolutions de filetage (34) adjacentes sont axialement espacées de telle sorte que ladite tige (31) définit une surface de tige (31A) exposée à un extérieur, ladite surface de tige (31A) étant divisée en une pluralité de sections de surface (311) définies entre lesdites circonvolutions de filetage (34) adjacentes, ladite surface de tige (31A) comprenant au moins une partie moletée (35) formée sur au moins une section de surface (311), ladite au moins une partie moletée (35) ayant une pluralité de creux formés en retrait (351) se croisant les uns les autres, une pluralité d'encoches (344) étant découpées dans lesdites crêtes de filetage (343) de ladite pluralité de circonvolutions de filetage (34), un bord coupant (346) étant formé le long d'une périphérie extérieure de chaque encoche (344) précitée, une pluralité d'unités coupantes (345) étant chacune formées entre chaque paire d'encoches adjacentes (344), chaque unité coupante (345) précitée d'une circonvolution de filetage (34) étant située en alignement avec une encoche correspondante (344) d'une autre circonvolution de filetage (34) adjacente à ladite circonvolution de filetage (34).

2. - Vis (3) selon la revendication 1, dans laquelle ladite pluralité d'encoches (344) sont de forme incurvée.

3. - Vis (3) selon l'une quelconque des revendications 1 à 2, dans laquelle ladite pluralité d'encoches (344) et ladite pluralité d'unités coupantes (345) sont formées sur une partie desdites circonvolutions de filetage (34).

4. - Vis (3) selon l'une quelconque des revendications 1 à 3, dans laquelle une pluralité de parties moletées (35) sont disposées sur ladite pluralité de sections de surface (311) définies entre des circonvolutions de filetage adjacentes successives parmi lesdites circonvolutions de filetage (34).

5. - Vis (3) selon l'une quelconque des revendications 1 à 3, dans laquelle ladite au moins une partie moletée (35) est disposée sur une section de surface correspondante parmi lesdites sections de surface (311) entre une autre circonvolution de filetage (34) sur deux de telle sorte qu'une pluralité de parties moletées (35) sont espacées les unes des autres.

6. - Vis (3) selon l'une quelconque des revendications 1 à 5, dans laquelle au moins l'une desdites sections de surface (311) est formée en retrait pour définir une rainure annulaire (36).

7. - Vis (3) selon l'une quelconque des revendications 1 à 6, dans laquelle ladite au moins une partie moletée (35) occupe une surface partielle de ladite au moins une section de surface (311).

8. - Vis (3) selon l'une quelconque des revendications 1 à 7, dans laquelle ladite pluralité de circonvolutions de filetage (34) définissent une première partie filetée (34A) et une seconde partie filetée (34B), ladite seconde partie filetée (34B) étant disposée en spirale sur ladite tige (31) et entre ladite première partie filetée (34A).
